# FASCICULE DE BREVET EUROPEEN

(11) **EP 2 419 788 B1**
(45) Date de publication et mention de la délivrance du brevet: **04.06.2014**
(21) Numéro de dépôt: 10723678.8
(22) Date de dépôt: 15.04.2010
(51) Int. Cl.: G02F 1/155

(54) **DISPOSITIF ELECTROCHROME A TRANSPARENCE CONTROLEE**
ELEKTROCHROME ANZEIGE MIT KONTROLLIERTER TRANSMISSION
ELECTROCHROMIC DEVICE WITH CONTROLLED TRANSMISSION

(30) Priorité: 16.04.2009 FR 0952492
(43) Date de publication de la demande: 22.02.2012
(73) Titulaire: Sage Electrochromics, Inc., Faribault, MN 55021 (US)
(72) Inventeur: LAMINE, Driss, F-92160 Anthony (FR); VALENTIN, Emmanuel, F-94420 Le Plessis Trevise (FR); DUBRENAT, Samuel, F-75017 Paris (FR)
(74) Mandataire: Neuviale, Bertrand
(86) Numéro de dépôt international: PCT/FR2010/050724
(87) Numéro de publication internationale: WO 2010/119229

(56) Documents cités:
- WO-A-02/06889
- WO-A2-2004/042457
- FR-A- 2 781 084
- FR-A- 2 874 100
- US-A- 5 724 175
- US-A1- 2008 030 836

## Description

La présente invention concerne un dispositif électrochrome à transparence contrôlée, notamment destiné à constituer un vitrage électrocommandable ainsi qu'un procédé de fabrication de celui-ci. Elle concerne également un vitrage électrochrome pourvu d'un tel dispositif ainsi que l'utilisation de ce dernier pour des applications diverses.

On connaît des vitrages qui possèdent une capacité de transmission de la lumière qui est réglable à partir d'un bon niveau de transparence jusqu'à une opacité la plus importante. De tels vitrages ont montré des applications dans les domaines techniques les plus divers.

On peut ainsi les utiliser en tant que vitrages d'une habitation afin, par exemple, d'ajuster le niveau d'ensoleillement d'un local en fonction des conditions extérieures et des souhaits des utilisateurs. On peut également les utiliser en tant que volets d'isolation pour préserver l'intimité des habitants d'un local soit vis-à-vis de l'extérieur, soit vis-à-vis de pièces contiguës.

On peut également, dans le domaine automobile, faire appel à de tels dispositifs pour, par exemple, régler le niveau de transparence du pare-brise et/ou des vitres latérales ou du vitrage de toit d'une voiture, ainsi que sur certains accessoires de celle-ci, tels que notamment les rétroviseurs, afin de contrôler le flux de la lumière réfléchie vers le conducteur et éviter l'éblouissement de ce dernier. On peut bien entendu les utiliser dans d'autres domaines tels que notamment le domaine aéronautique pour contrôler par exemple la transparence des hublots des aéronefs.

On sait que les dispositifs électrochromes comportent une couche d'un matériau électrochrome en mesure d'insérer réversiblement et simultanément des ions et des électrons, dont les états d'oxydation qui correspondent aux états insérés et désinsérés sont d'une coloration distincte lorsqu'ils sont soumis à une alimentation électrique appropriée; l'un de ces états présentant une transmission lumineuse plus élevée que l'autre. Le matériau électrochrome peut être par exemple à base d'oxyde de tungstène et doit être mis en contact avec une source d'électrons, telle que par exemple une couche électroconductrice transparente, et d'une source d'ions (des cations ou des anions) telle qu'un électrolyte conducteur ionique. On sait qu'une contre-électrode, en mesure également d'insérer de façon réversible des cations, doit être associée à la couche de matériau électrochrome, symétriquement par rapport à celle-ci, de sorte que, macroscopiquement, l'électrolyte apparaît comme un simple médium des ions. La contre-électrode doit être constituée d'une couche neutre en coloration ou, du moins, transparente ou peu colorée quand la couche électrochrome est à l'état coloré.

L'oxyde de tungstène étant un matériau électrochrome cathodique, c'est-à-dire que son état coloré correspond à l'état le plus réduit, un matériau électrochrome anodique à base d'oxyde de nickel ou d'iridium peut être par exemple utilisé pour la contre-électrode. Il a également été proposé d'utiliser un matériau optiquement neutre dans les états d'oxydation concernés, comme par exemple l'oxyde de cérium ou des matériaux organiques comme les polymères conducteurs électroniques (polyaniline) ou le bleu de Prusse.

On peut ranger actuellement les systèmes électrochromes en deux catégories en fonction de l'électrolyte utilisé.

Dans la première catégorie l'électrolyte peut ainsi se présenter sous la forme d'un polymère ou d'un gel, tel que par exemple un polymère à conduction protonique, tel que ceux décrits dans les brevets européens EP 0 253 713, et EP 0 670 346 ou un polymère à conduction d'ions lithium, tel que ceux décrits dans les brevets EP 0 382 623, EP 0 518 754 ou EP 0 532 408. On parle alors de systèmes électrochromes mixtes.

Dans la seconde catégorie, l'électrolyte peut également être constitué d'une couche minérale formant un conducteur ionique qui est isolé électriquement. Ces systèmes électrochromes sont alors désignés comme étant « tout solide ». On pourra se référer aux brevets européens EP 0 867 752 et EP 0 831 360.

On connaît d'autres types de systèmes électrochromes, tels que notamment les systèmes électrochromes dits « tout polymère », dans lesquels deux couches électroconductrices sont disposées de part et d'autre d'un empilement comprenant un polymère à coloration cathodique, un polymère isolant électronique conducteur ionique (de H⁺ ou Li⁺ tout particulièrement) et enfin un polymère à coloration anodique (tel que la polyaniline ou le polypyrrole).

On sait que la technique actuelle de fabrication des dispositifs électrochromes consiste, de façon schématique, à déposer successivement sur un substrat support, transparent ou non, une électrode électroconductrice inférieure, généralement une couche d'oxyde d'indium et d'étain (ITO) pour « Indium Tin Oxide », des couches fonctionnelles électrochromes, par exemple d'oxyde d'iridium (IrOx),d'oxyde de tungstène (WO3),d'oxyde de tantale (TA2O5), et une électrode électroconductrice supérieure. Habituellement l'empilement se termine par un polymère de feuilletage et un contre-substrat.

Bien entendu les deux électrodes électroconductrices inférieure et supérieure doivent être réunies à des connecteurs d'amenée de courant respectifs. Cette connexion est habituellement obtenue au moyen de clinquants métalliques qui sont respectivement mis en contact avec l'électrode supérieure et avec l'électrode inférieure.

Si le contact du connecteur avec l'électrode supérieure ne présente guère de difficultés dans le principe, il n'en est pas de même en ce qui concerne le contact du connecteur avec l'électrode inférieure en raison de sa non accessibilité due au dépôt des différentes couches. C'est pourquoi on a proposé de préserver une zone de celle-ci, dite zone de connexion, au moyen d'un masque adhésif pendant le dépôt des couches électrochromes. Une fois le dépôt des différentes couches effectué il suffit alors de retirer l'adhésif pour ôter du même coup les couches déposées sur celui-ci et avoir ainsi accès à l'électrode inférieure, cette dernière recevant alors le connecteur qui lui est destiné.

Cette technique présente un certain nombre d'inconvénients liés notamment d'une part à l'utilisation du masque adhésif et, d'autre part, aux moyens utilisés pour assurer la fixation des connecteurs sur les électrodes.

Concernant le masque adhésif, on notera que la pose de celui-ci est une opération longue et délicate, dans la mesure où, d'une part, il doit être appliqué de façon parfaite sur l'électrode inférieure afin de ne pas perturber le dépôt des couches ultérieures et, d'autre part, la longueur à recouvrir est importante, notamment lorsque la connexion de l'électrode inférieure se fait sur toute la périphérie du substrat.

Ensuite, lors du retrait du masque, les couches qui ont été déposées sur celui-ci ont tendance à s'effriter et à se redéposer ensuite sous forme de poussières sur l'empilement, créant ainsi des dysfonctionnements du dispositif. C'est pourquoi, afin d'éviter un tel inconvénient, le retrait du masque s'accompagne habituellement d'une aspiration, ce qui impose pour cette opération l'intervention de deux opérateurs.

Par ailleurs, il arrive que lors des phases de dépôt des différentes couches qui suivent l'application du masque adhésif, ce dernier se rétracte sous l'effet de la chaleur, si bien que, lors de l'application de la couche électroconductrice formant l'électrode supérieure, cette dernière peut être amenée à venir en contact avec l'électrode inférieure créant ainsi un court-circuit plus ou moins partiel ayant pour effet de diminuer le contraste que le dispositif est en mesure de délivrer. Afin de pallier un tel risque on est amené à réaliser un margeage contrôlé de la périphérie de la zone recouverte par le masque, c'est-à-dire une découpe traversant les différentes couches déposées et s'arrêtant au niveau de celle formant l'électrode inférieure.

De plus, la sélection du masque adhésif est une opération délicate dans la mesure où celui-ci doit conserver son intégrité malgré les diverses contraintes physiques auxquelles il est soumis au cours des étapes de déposition des différentes couches. Il doit ainsi être notamment en mesure de subir des dépressions importantes sans être sujet au dégazage, et présenter un bonne tenue en température. En conséquence d'un tel cahier des charges très strict on comprend que son coût est habituellement élevé.

La demande de brevet W00206889 illustre un dispositif électrochrome dans lequel les connexions électriques sont rapportées sur l'électrode inférieure. Le document US5724175 dévoile un dispositif électrochrome comportant des connexions électriques rapportées sur l'électrode supérieure et des incisions des couches formant l'empilement actif afin d'éviter des court-circuits.

La présente invention a pour but de remédier aux inconvénients précités en proposant un dispositif électrochrome à transparence contrôlée permettant notamment d'éviter les problèmes inhérents à l'utilisation des rubans de masquage.

La présente invention a ainsi pour objet un dispositif électrochrome à transmission ou réflexion contrôlée d'au moins une surface active, de type électrocommandable, comportant sur un substrat porteur, un empilement comprenant au moins successivement une couche formant une électrode inférieure électroconductrice, diverses couches fonctionnelles dont au moins une couche électrochrome, et une couche formant une électrode supérieure électroconductrice, et comportant un premier connecteur d'amenée de courant, un deuxième connecteur d'amenée de courant ainsi que des moyens de connexion et dans lequel :
- au moins un margeage, dit sélectif, traverse l'électrode supérieure et les différentes couches séparant celle-ci de l'électrode inférieure sans traverser cette dernière, ce margeage sélectif séparant au moins la surface de l'électrode supérieure en deux zones isolées électriquement l'une de l'autre, à savoir une zone libre et une zone active contenant la surface active,
- au moins un margeage, dit total, traverse l'électrode supérieure et les différentes couches séparant celle-ci du substrat, ce margeage total séparant au moins la surface de l'électrode inférieure en deux zones isolées électriquement l'une de l'autre, à savoir une zone libre et une zone active contenant la surface active,
- au moins une zone libre de l'électrode supérieure reçoit un premier connecteur d'amenée de courant relié par soudure à la zone active de l'électrode inférieure,
- la surface active de l'électrode supérieure est en contact électrique avec des moyens de connexion reliés à un second connecteur d'amenée de courant, isolé électriquement de la zone libre reliée à l'électrode inférieure,le margeage total partageant la surface de l'électrode supérieure en deux zones, à savoir une seconde zone libre et une zone active contenant la surface active (CDEF), le second connecteur d'amenée du courant étant disposé dans la seconde zone libre de l'électrode supérieure.

Les moyens de connexion pourront être constitués d'un réseau de fils fins parallèles et conducteurs du courant électrique ou par exemple d'un cadre métallique, notamment un clinquant, disposé en périphérie de la zone active.

Préférentiellement les moyens de connexion seront supportés par un support transparent notamment constitué d'un polymère thermoplastique, tel que par exemple du polyuréthane ou du polyvinylbutyral (PVB), ce support pouvant constituer un intercalaire de feuilletage.

Dans une variante de mise en oeuvre de l'invention le connecteur d'amenée de courant qui est relié par soudure à l'électrode inférieure pourra être disposé sur plusieurs zones libres de l'électrode supérieure, et des moyens d'isolation électrique seront prévus entre ledit second connecteur d'amenée de courant et la surface de l'électrode supérieure, ces moyens d'isolation pouvant notamment être constitués d'une feuille mince isolante électriquement.

Le substrat porteur pourra par ailleurs être un substrat à fonction verrière, notamment en verre ou en matière plastique.

Préférentiellement la liaison par soudure entre le connecteur d'amenée du courant et l'électrode inférieure sera une soudure de type à ultrasons. De plus au moins l'une des électrodes sera formée d'au moins une couche d'oxyde mixte d'étain et d'indium (ITO).

Les zones libres définies par les margeages de type total et sélectif seront préférentiellement situées en périphérie du substrat. Par ailleurs ce dernier pourra être de forme rectangulaire et les margeages de type total et sélectif seront respectivement perpendiculaires et réalisés parallèlement à des côtés opposés de celui-ci.

La présente invention a également pour objet un vitrage électrochrome, caractérisé en ce qu'il comporte un dispositif électrochrome du type précédemment décrit et présentant notamment une transmission et/ou une réflexion lumineuse et/ou énergétique variable, avec le substrat ou au moins une partie des substrats transparent(s) ou partiellement transparent(s), en matériau plastique, de préférence monté en vitrage multiple et/ou feuilleté, ou en double vitrage.

On décrira ci-après, à titre d'exemple non limitatif, diverses formes d'exécution de la présente invention, en référence au dessin annexé sur lequel :
- les figures 1a et 1b sont des vues schématiques respectivement en coupe verticale suivant la ligne AA de la figure 1b, et en vue de dessus, illustrant une première phase d'un premier mode de réalisation d'un dispositif électrochrome suivant l'invention,
- les figures 2a et 2b sont des vues schématiques respectivement en coupe verticale suivant la ligne AA de la figure 2b, et en vue de dessus, illustrant une phase de réalisation d'un margeage sélectif suivant l'invention,
- les figures 3a et 3b sont des vues schématiques respectivement en coupe verticale suivant la ligne BB de la figure 3b, et en vue de dessus, illustrant une autre phase de réalisation d'un margeage total suivant l'invention,
- les figures 4a et 4b sont des vues schématiques respectivement en coupe verticale suivant la ligne AA de la figure 4b, et en vue de dessus, illustrant une phase de liaison par soudure d'un élément de connexion sur l'électrode inférieure du dispositif suivant l'invention représenté sur les figures précédentes,
- les figures 5a et 5b sont des vues schématiques respectivement en coupe verticale suivant la ligne BB de la figure 5b, et en vue de dessus, illustrant une phase de mise en contact d'un élément de connexion sur l'électrode supérieure du dispositif suivant l'invention représenté sur les figures précédentes,
- la figure 5c est une vue schématique en coupe verticale suivant la ligne BB de la figure 5b, illustrant la dernière phase de réalisation du dispositif suivant l'invention représenté sur les figures précédentes,
- la figure 6 est une vue de dessus schématique montrant un exemple de profil d'occultation obtenu dans le dispositif suivant l'invention représenté précédemment,
- les figures 7a et 7b sont des vues schématiques respectivement en coupe verticale, suivant la ligne AA de la figure 7b, d'un autre exemple de mise en oeuvre de la présente invention,
- la figure 8 est une vue de dessus d'une variante de mise en oeuvre de l'invention,
- la figure 9 est une vue de dessus schématique d'une autre variante montrant la réalisation de plusieurs dispositifs suivant l'invention à partir d'un même substrat.

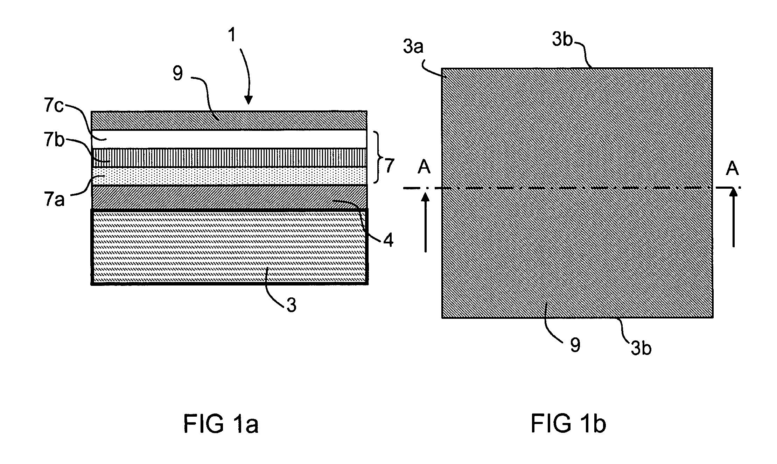

On a représenté sur les figures 1a à 5c les phases essentielles d'un premier exemple d'un procédé de fabrication d'un dispositif électrochrome à transmission contrôlée 1 suivant l'invention qui est notamment destiné à être appliqué à la constitution d'un vitrage dont on souhaite pouvoir régler la transparence.

Dans une première étape du procédé suivant l'invention, et ainsi que représenté sur les figures 1a et 1b, on dépose sur un substrat porteur 3, constitué d'un support verrier dans le présent mode de mise en oeuvre, une couche électroconductrice destinée à former une électrode inférieure 4. Ce dépôt est notamment effectué par un procédé classique de pulvérisation cathodique. De façon connue, cette électrode pourra être de type métallique ou de type dit TCO (oxyde conducteur transparent) en In₂O₃:Sn(ITO), SnO₂:F ZnO :Al. Elle pourra également être de type multi-couche du type TCO/métal/TCO, ce métal étant choisi notamment parmi l'argent, l'or, le platine, le cuivre, ou un multi-couche du type NiCr/métal/NiCr, le métal étant choisi notamment parmi l'argent, l'or, le platine, ou le cuivre.

On dépose ensuite une série de couches 7 formant l'ensemble fonctionnel électrochrome, à savoir une première couche électroactive 7a suivie d'une couche d'électrolyte 7b et d'une seconde couche électroactive 7c. Et on dépose enfin une seconde couche électroconductrice qui formera l'électrode supérieure 9.

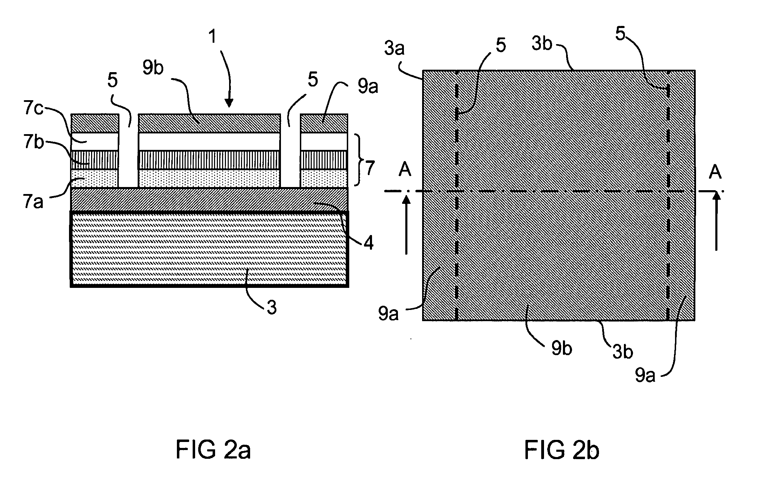

Dans une seconde étape du procédé, représentée sur les figures 2a et 2b, on réalise, en bordure de deux côtés opposés 3a du substrat verrier 3, un margeage rectiligne 5 parallèle à ces derniers.

On entendra par margeage dans le présent texte, une découpe faite à travers certaines des couches du dispositif, dont la largeur sera suffisante pour que chaque partie d'une couche découpée soit isolée électriquement de l'autre partie. Le margeage sera dit total lorsqu'il s'étendra en profondeur à partir de l'électrode supérieure 9 en traversant celle-ci ainsi que toutes les couches qui la séparent du substrat 3. Le margeage sera dit sélectif lorsqu'il s'étendra à partir de l'électrode supérieure 9 en traversant celle-ci ainsi que toutes les couches qui la séparent de l'électrode inférieure 4 sans traverser cette dernière.

Ces margeages seront préférentiellement réalisés, de façon connue, au moyen d'un faisceau laser, mais on pourra également faire appel à tout autre moyen permettant de les réaliser ainsi qu'exposé précédemment.

Ainsi que représenté (en traits pointillés) sur les figures 2a et 2b les margeages 5 sont du type dit sélectif, c'est-à-dire qu'ils traversent l'électrode supérieure 9 et toutes les couches qui la séparent de l'électrode inférieure 4 sans traverser cette dernière. Chacun des deux margeages sélectifs 5 partage ainsi la surface de l'électrode supérieure 9 en deux zones, à savoir une première zone 9a dite zone libre et une seconde zone 9b dite zone active, qui est commune aux deux margeages dans le présent mode de mise en oeuvre, et qui contient la zone qui sera la surface active CDEF du dispositif, c'est-à-dire la surface dont le niveau de transmission de la lumière sera contrôlé, ainsi qu'exposé ci-après.

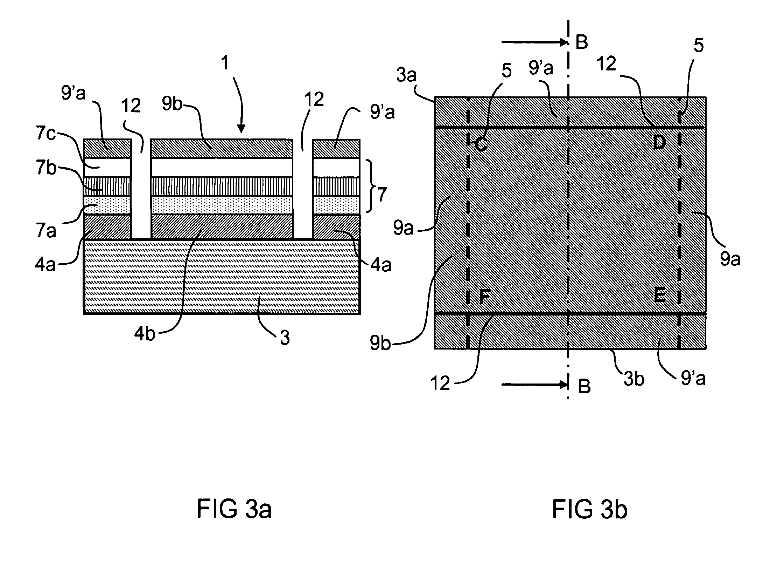

On réalise ensuite, ainsi que représenté sur les figures 3a et 3b, deux autres margeages 12 en bordure des deux autres côtés opposés 3b du substrat 3, qui sont représentés en traits pleins sur les figures. Ces deux margeages sont des margeages de type total, si bien qu'ils s'étendent à travers l'électrode supérieure 9 et à travers la totalité des couches qui la séparent du substrat 3, à savoir dans le présent exemple, les trois couches fonctionnelles électrochromes 7a, 7b et 7c et l'électrode inférieure 4. Chacun de ces deux margeages 12 partage ainsi la surface des électrodes supérieure 9 en deux zones, à savoir une seconde zone libre 9'a et une zone active 9b contenant la surface active CDEF du dispositif.

Chacun des deux margeages 12 partage également les autres couches et notamment l'électrode inférieure 4 en deux zones, à savoir une première zone 4a, dite zone libre, et une seconde zone 4b, dite zone active, cette dernière étant commune aux deux margeages dans le présent mode de mise en oeuvre, et contient la surface active CDEF du dispositif ainsi qu'exposé ci-après.

On pourrait bien entendu dans le procédé suivant l'invention inverser l'ordre de réalisation des margeages sélectif 5 et total 12.

On constate que chacune des zones libres 9a définie par chaque margeage sélectif 5 et chacune des zones libres 4a, 9'a définie par chaque margeage total 12 est isolée électriquement d'une part des autres zones libres et, d'autre part, des zones actives respectives 4b et 9b des électrodes inférieure et supérieure contenant la surface active CDEF du dispositif. Chacune de ces zones libres d'une électrode peut donc être réunie à une zone active de l'autre électrode sans causer de court-circuit.

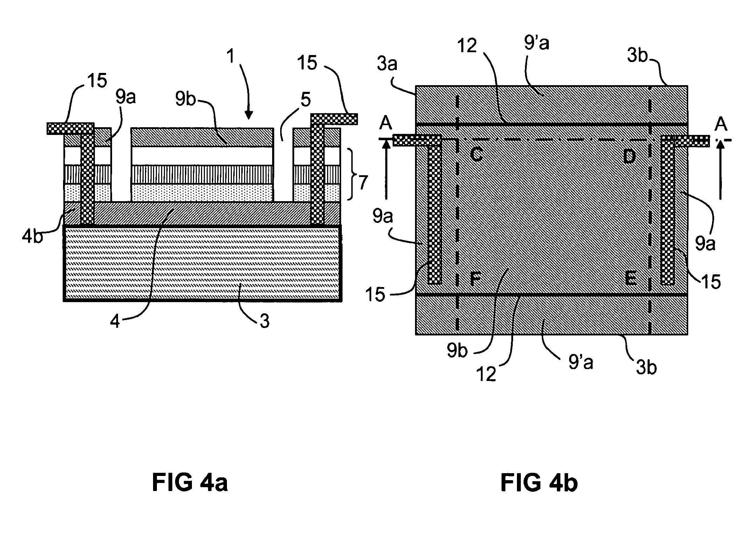

L'invention permet donc, dans une troisième étape, ainsi que représenté sur les figures 4a et 4b, de réunir par soudure ultrasons, une barrette de connexion 15 à l'électrode inférieure 4, à partir de la zone libre 9a de l'électrode supérieure 9 sans que cette opération ne vienne générer un court-circuit.

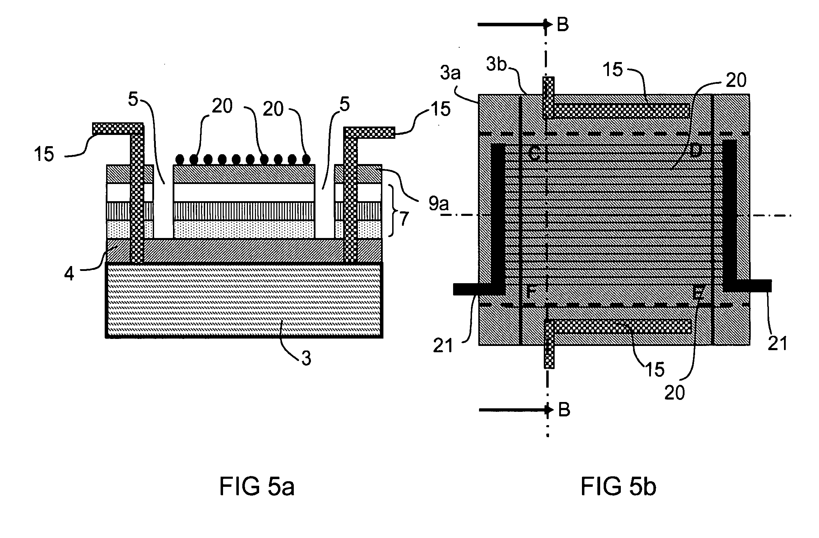

La connexion électrique au niveau de l'électrode supérieure 9 sera obtenue par des moyens de connexion constitués d'un réseau d'éléments conducteurs du courant électrique, notamment un réseau de fils conducteurs 20, ainsi que représenté sur les figures 5a à 5c.

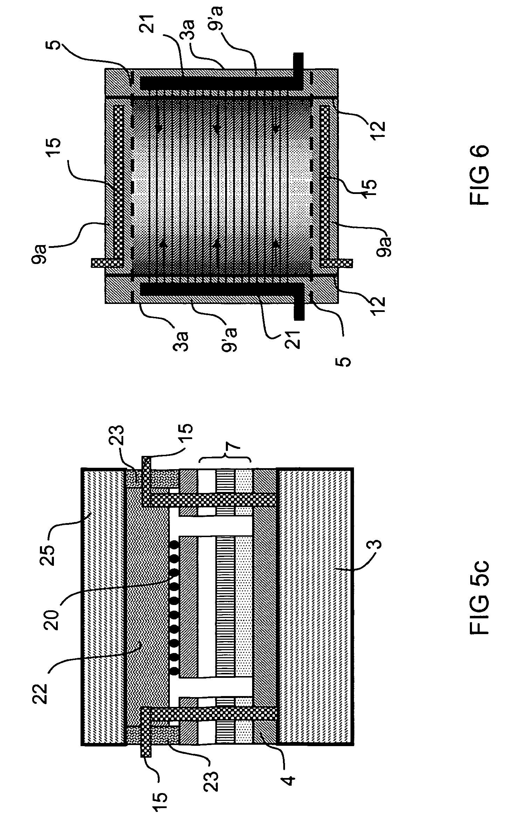

Ce réseau est constitué de fils parallèles qui sont écartés d'une distance de l'ordre de 1 à 3mm et qui sont fixés par soudure à des barrettes de connexion 21. Le réseau de fils 20 est disposé sur une feuille support intercalaire 22 à base de polymère thermoplastique, et notamment une feuille de polyuréthane ou de polyvinylbutyral (PVB), qui en assure le maintien ainsi que représenté sur la figure 5c.

Les dimensions de la feuille support intercalaire 22 seront préférentiellement légèrement inférieures à celles des autres couches de l'empilement, de façon à permettre la mise en place, sur la périphérie, d'un joint d'étanchéité 23 qui est traversé par les barrettes de connexion 15 et 21 et qui contribue ainsi à leur maintien.

On termine l'empilement par un contre-substrat verrier 25 et l'ensemble est ensuite feuilleté. Au cours de cette opération, ainsi que représenté sur la figure 5c, la feuille support intercalaire 22 applique le réseau de fils 20 contre l'électrode supérieure 9 assurant ainsi un excellent contact électrique des fils 20 avec cette dernière.

Un tel mode de mise en oeuvre permet d'obtenir une faible résistivité de l'électrode supérieure, de l'ordre de 0,5 Ω/carré et, ce faisant, on diminue le temps de commutation du système ainsi que le phénomène de halo qui tend à se manifester dans ce type de dispositif.

En effet, on sait que lorsque l'on commande une variation de transmission de la surface active, par exemple une variation de transparence, celle-ci ne se traduit pas par une variation uniforme immédiate de densité de l'ensemble de cette surface active. Pour des problèmes liés notamment à la résistivité des différentes couches électrochrome concernées, ainsi qu'à une différence de résistivité des électrodes supérieure et inférieure, la variation géométrique dans le temps de la transparence de la surface active, dénommée ci-après profil d'occultation, peut prendre différents aspects en fonction de la disposition des barrettes de connexion 15 et 21 sur les électrodes.

La présente invention permet au concepteur de réaliser avec une plus grande liberté des dispositifs électrochromes dont les barrettes de connexion peuvent avoir des formes et des dispositions sur les électrodes qui sont fonction du profil d'occultation que l'on souhaite obtenir.

Ainsi, dans la disposition précédemment décrite on obtient un profil d'occultation en forme de rideau se déplaçant des bords 3a vers le centre, qui est représenté de façon schématique sur la figure 6.

Par ailleurs, dans ce mode de mise en oeuvre de l'invention, la surface active CDEF du dispositif est délimitée par les margeages de types sélectif 5 (en traits pointillés sur le dessin) et de type total 12 (en traits continus sur le dessin). La présente invention permet de réduire à un minimum les surfaces des zones libres au droit desquelles s'effectuent les connexions, favorisant ainsi la surface active du dispositif par rapport aux solutions de l'état antérieur de la technique.

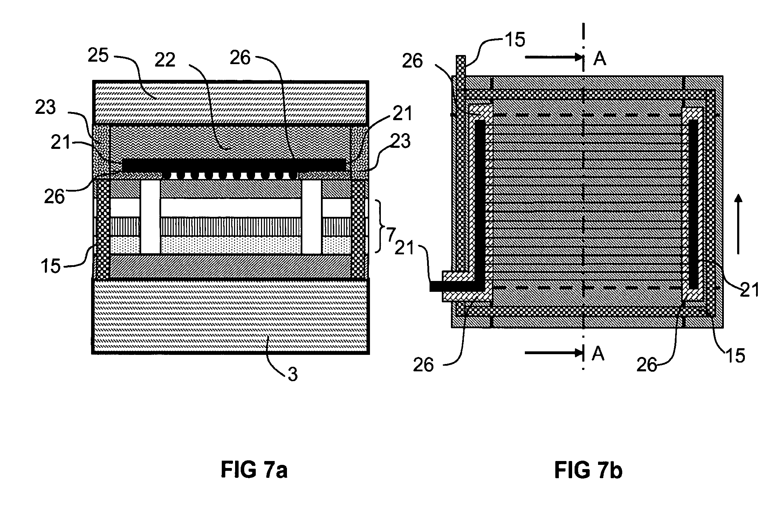

On peut également, dans une variante de réalisation représentée sur les figures 7a et 7b, réaliser une barrette de connexion 15 qui est disposée sur la totalité de la périphérie de l'électrode supérieure 9 et plus précisément sur les zones libres 9a et 9'a de celle-ci, cette barrette de connexion étant soudée par soudure ultrasons à l'électrode inférieure 4.

Dans une telle configuration, afin d'éviter les courts-circuits, on interpose des bandes isolantes et transparentes 26 entre les zones 9a et 9'a de l'électrode supérieure 4 et les barrettes de connexion 21 entre lesquelles sont disposés les fils 20.

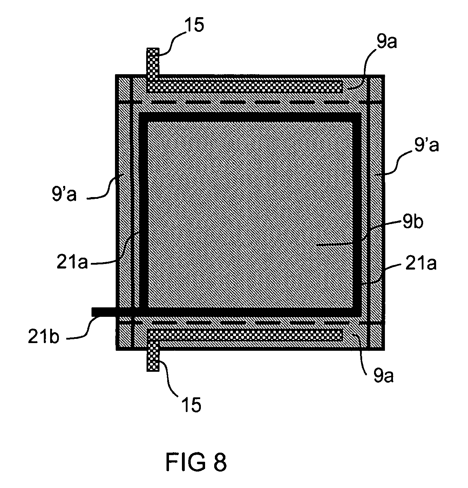

Dans une autre variante de mise en oeuvre de l'invention, représentée sur la figure 8, la connexion de l'électrode supérieure 9 est assurée par des clinquants métalliques 21a en forme de cadre qui sont disposés sur la périphérie de la zone active 9b et qui sont soudés à une barrette de connexion 21b. Ces clinquants 21a sont appliqués, lors de l'opération de feuilletage, contre la zone active 9b, par la feuille intercalaire 22 établissant ainsi un bon contact électrique avec celle-ci.

La présente invention permet ainsi à la fois de supprimer du processus de fabrication des dispositifs électrochrome l'étape critique de mise en place et de retrait des adhésifs de masquage, ce qui se traduit par un gain de temps important, tout en en permettant d'améliorer la fiabilité dans le temps de ces dispositifs en permettant de relier leur électrode inférieure 4 par soudure aux moyens de connexion. Elle permet de plus, en permettant de diminuer les courants de fuite dans des proportions importantes, de réaliser un dispositif électrochrome présentant un temps de réponse réduit et une plus faible consommation électrique. Elle permet enfin de rendre maximale la surface active CDEF du dispositif par rapport aux dimensions du substrat support et de contrôler la forme du profil d'occultation du dispositif.

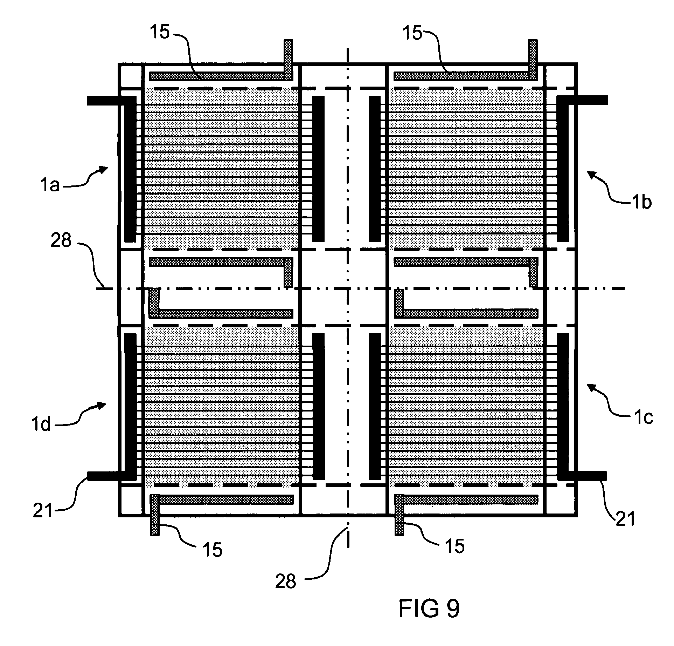

On peut également suivant l'invention réaliser sur un même substrat support 3 plusieurs dispositifs électrochromes 1 qui, en fin de réalisation, seront séparés par découpe du substrat suivant des lignes de découpe 28 représentées en traits mixtes sur la figure 9, de façon à constituer des dispositifs électrochromes spécifiques 1a, 1b, 1c et 1d.

Un tel mode de mise en oeuvre permet de ne réaliser, par exemple, que quatre margeages de type total et quatre margeages de type sélectif pour quatre dispositifs, ce qui représente une simplification et un gain de temps au niveau de la fabrication.

## Revendications

1. Dispositif électrochrome à transmission ou réflexion contrôlée d'au moins une surface active (CDEF), de type électrocommandable, comportant sur un substrat porteur (3) un empilement comprenant au moins successivement une couche formant une électrode inférieure électroconductrice (4), diverses couches fonctionnelles (7) dont au moins une couche électrochrome, et une couche formant une électrode supérieure électroconductrice (9), le dispositif comprenant également un premier connecteur d'amenée de courant (15), un second connecteur d'amenée de courant (21) et des moyens de connexion (20, 21a) et, dans lequel :
- au moins un margeage (12), dit sélectif, traverse l'électrode supérieure (9) et les différentes couches séparant celle-ci de l'électrode inférieure (4) sans traverser cette dernière, ce margeage sélectif (12) séparant au moins la surface de l'électrode supérieure (9) en deux zones isolées électriquement l'une de l'autre, à savoir une zone libre (9a) et une zone active (9b) contenant la surface active (CDEF),
- au moins une zone libre (9a) de l'électrode supérieure (9) reçoit le premier connecteur d'amenée de courant (15) relié par soudure à la zone active (4b) de l'électrode inférieure (4), et **caractérisée en ce que**
- au moins un margeage (5), dit total, traverse l'électrode supérieure (9) et les différentes couches séparant celle-ci du substrat (3), ce margeage total (5) séparant au moins la surface de l'électrode inférieure (4) en deux zones isolées électriquement l'une de l'autre, à savoir une zone libre (4a) et une zone active (4b) contenant la surface active (CDEF),
- la surface active (CDEF) de l'électrode supérieure (9) est en contact électrique avec les moyens de connexion (20,21a) reliés au second connecteur d'amenée de courant (21), isolé électriquement de la zone libre (9a) reliée à l'électrode inférieure (4),
et **en ce que** le margeage total (12) partage la surface de l'électrode supérieure (9) en deux zones, à savoir une seconde zone libre (9'a) et une zone active contenant la surface active (CDEF), le second connecteur d'amenée du courant (21) étant disposé dans la seconde zone libre (9'a) de l'électrode supérieure (9).

2. Dispositif électrochrome à transmission contrôlée suivant la revendication 1 **caractérisé en ce que** les moyens de connexion sont constitués d'un réseau de fils fins (20) parallèles et conducteurs du courant électrique.

3. Dispositif électrochrome à transmission contrôlée suivant la revendication 2 **caractérisé en ce qu'**il comporte bandes isolantes et transparentes qui sont disposées entre les zones libres (9a, 9'a) de l'électrode supérieure (9) et les seconds connecteurs d'amenée de courant (21) entre lesquels sont disposés les fils (20).

4. Dispositif électrochrome à transmission contrôlée suivant la revendication 1 **caractérisé en ce que** les moyens de connexion sont constitués d'un cadre métallique (21a), notamment un clinquant, disposé en périphérie de la zone active (9b).

5. Dispositif électrochrome à transmission contrôlée suivant l'une des revendications précédentes, **caractérisé en ce qu'**il comporte un support transparent (22) notamment constitué d'un polymère thermoplastique, tel que par exemple du polyuréthane ou du polyvinylbutyral, PVB, les moyens de connexion (20, 21a) étant supportés par le support transparent.

6. Dispositif électrochrome à transmission contrôlée suivant la revendication 5, **caractérisé en ce que** le support (22) constitue un intercalaire de feuilletage.

7. Dispositif électrochrome suivant la revendication 1, **caractérisé en ce que** le premier connecteur d'amenée de courant (15) relié par soudure à l'électrode inférieure (4) est disposé sur plusieurs zones libres (9a, 9'a) de l'électrode supérieure (9), et des moyens d'isolation électrique sont prévus entre ledit second connecteur d'amenée de courant (21) et la surface de l'électrode supérieure (9).

8. Dispositif électrochrome suivant la revendication 7, **caractérisé en ce que** les moyens d'isolation sont constitués d'une feuille mince (26) isolante électriquement.

9. Dispositif électrochrome à transmission contrôlée suivant l'une des revendications précédentes, **caractérisé en ce que** le substrat porteur (3) est un substrat à fonction verrière, notamment en verre ou en matière plastique.

10. Dispositif électrochrome à transmission contrôlée suivant l'une des revendications précédentes **caractérisé en ce que** la liaison par soudure entre le premier connecteur d'amenée du courant (15) et l'électrode inférieure (4) est une soudure de type à ultrasons.

11. Dispositif électrochrome à transmission contrôlée suivant la revendication 10 **caractérisé en ce que** le premier connecteur d'amenée de courant (15) est disposé sur la totalité de la périphérie de l'électrode supérieure (9).

12. Dispositif électrochrome à transmission contrôlée suivant l'une des revendications précédentes **caractérisé en ce qu'**au moins l'une des électrodes (4,9) est formée d'au moins une couche d'oxyde mixte d'étain et d'indium, ITO.

13. Dispositif électrochrome à transmission contrôlée suivant l'une des revendications précédentes **caractérisé en ce que** les zones libres (4a,9a,9'a) définies par les margeages de type total (5) et sélectif (12) sont situées en périphérie de celui-ci.

14. Dispositif électrochrome à transmission contrôlée suivant la revendication 13 **caractérisé en ce que** le substrat (3) est de forme rectangulaire et **en ce que** les margeages de type sélectif (5) et total (12) sont respectivement réalisés parallèlement à des côtés opposés (3a,3b) du substrat (3).

15. Dispositif électrochrome à transmission contrôlée suivant l'une des revendications précédentes **caractérisé en ce que** les margeages de type total (5) et sélectif (12) sont respectivement perpendiculaires.

16. Vitrage électrochrome, **caractérisé en ce qu'**il comporte un dispositif électrochrome selon l'une des revendications 1 à 15, présentant notamment une transmission et/ou réflexion lumineuse et/ou énergétique variable, avec le substrat ou au moins une partie des substrats transparent(s) ou partiellement transparent(s), en matériau plastique, de préférence monté en vitrage multiple et/ou feuilleté, ou en double vitrage.

## Patentansprüche

1. Elektrochrome Vorrichtung mit kontrollierter Durchlässigkeit oder Reflexion wenigstens einer aktiven Oberfläche (CDEF), vom elektrisch steuerbaren Typ, umfassend, auf einem Trägersubstrat (3), einen Stapel, der wenigstens nacheinander eine Schicht, welche eine elektrisch leitende untere Elektrode (4) bildet, verschiedene Funktionsschichten (7), darunter wenigstens eine elektrochrome Schicht, sowie eine Schicht, welche eine elektrisch leitende obere Elektrode (9) bildet, umfasst, wobei die Vorrichtung auch einen ersten Stromzuführverbinder (15), einen zweiten Stromzuführverbinder (21) sowie Anschlussmittel (20, 21 a) umfasst und wobei:
- wenigstens eine sogenannte selektive Randentschichtung (12) die obere Elektrode (9) und die verschiedenen Schichten, welche diese von der unteren Elektrode (4) trennen, durchzieht, ohne letztere zu durchziehen, wobei diese selektive Randentschichtung (12) wenigstens die Oberfläche der oberen Elektrode (9) in zwei voneinander elektrisch isolierte Bereiche trennt, nämlich einen freien Bereich (9a) und einen aktiven Bereich (9b), der die aktive Oberfläche (CDEF) enthält,
- wenigstens ein freier Bereich (9a) der oberen Elektrode (9) den ersten Stromzuführverbinder (15), der mit dem aktiven Bereich (4a) der unteren Elektrode (4) verschweißt ist, aufnimmt, und
**dadurch gekennzeichnet, dass**
- wenigstens eine sogenannte vollständige Randentschichtung (5) die obere Elektrode (9) und die verschiedenen Schichten, welche diese von dem Substrat (3) trennen, durchzieht, wobei diese vollständige Randentschichtung (5) wenigstens die Oberfläche der unteren Elektrode (4) in zwei voneinander elektrisch isolierte Bereiche trennt, nämlich einen freien Bereich (4a) und einen Bereich (4b), der die aktive Oberfläche (CDEF) enthält,
- die aktive Oberfläche (CDEF) der oberen Elektrode (9) mit den Anschlussmitteln (20, 21 a), die mit dem zweiten Stromzuführverbinder (21) verbunden sind, der von dem mit der unteren Elektrode (4) verbundenen freien Bereich (9a) elektrisch isoliert ist, in elektrischem Kontakt steht,
und dass die vollständige Randentschichtung (12) die Oberfläche der oberen Elektrode (9) in zwei Bereiche teilt, nämlich einen zweiten freien Bereich (9'a) und einen aktiven Bereich, der die aktive Oberfläche (CDEF) enthält, wobei der zweite Stromzuführverbinder (21) in dem zweiten freien Bereich (9'a) der oberen Elektrode (9) angeordnet ist.

2. Elektrochrome Vorrichtung mit kontrollierter Durchlässigkeit nach Anspruch 1, **dadurch gekennzeichnet, dass** die Anschlussmittel von einem Netz aus parallelen und den elektrischen Strom leitenden feinen Drähten (20) gebildet sind.

3. Elektrochrome Vorrichtung mit kontrollierter Durchlässigkeit nach Anspruch 2, **dadurch gekennzeichnet, dass** sie isolierende und transparente Streifen umfasst, die zwischen den freien Bereichen (9a, 9'a) der oberen Elektrode (9) und den zweiten Stromzuführverbindern (21) angeordnet sind, zwischen denen die Drähte (20) angeordnet sind.

4. Elektrochrome Vorrichtung mit kontrollierter Durchlässigkeit nach Anspruch 1, **dadurch gekennzeichnet, dass** die Anschlussmittel von einem Metallrahmen (21 a), insbesondere einer Metallfolie, der/die am Umfang des aktiven Bereichs (9b) angeordnet ist, gebildet sind.

5. Elektrochrome Vorrichtung mit kontrollierter Durchlässigkeit nach einem der vorstehenden Ansprüche, **dadurch gekennzeichnet, dass** sie einen transparenten Träger (22) umfasst, der insbesondere aus einem thermoplastischen Polymer, wie zum Beispiel Polyurethan oder Polyvinylbutyral PVB besteht, wobei die Anschlussmittel (20, 21 a) durch den transparenten Träger getragen werden.

6. Elektrochrome Vorrichtung mit kontrollierter Durchlässigkeit nach Anspruch 5, **dadurch gekennzeichnet, dass** der Träger (22) eine verbindende Zwischenschicht bildet.

7. Elektrochrome Vorrichtung nach Anspruch 1, **dadurch gekennzeichnet, dass** der erste Stromzuführverbinder (15), der mit der unteren Elektrode (4) verschweißt ist, an mehreren freien Bereichen (9a, 9'a) der oberen Elektrode (9) angeordnet ist, und Mittel zum elektrischen Isolieren zwischen dem zweiten Stromzuführverbinder (21) und der Oberfläche der oberen Elektrode (9) vorgesehen sind.

8. Elektrochrome Vorrichtung nach Anspruch 7, **dadurch gekennzeichnet, dass** die Isolierungsmittel von einer elektrisch isolierenden dünnen Folie (26) gebildet sind.

9. Elektrochrome Vorrichtung mit kontrollierter Durchlässigkeit nach einem der vorstehenden Ansprüche, **dadurch gekennzeichnet, dass** das Trägersubstrat (3) ein Substrat mit Glasfunktion, insbesondere aus Glas oder aus Kunststoff ist.

10. Elektrochrome Vorrichtung mit kontrollierter Durchlässigkeit nach einem der vorstehenden Ansprüche, **dadurch gekennzeichnet, dass** die Schweißverbindung zwischen dem ersten Stromzuführverbinder (15) und der unteren Elektrode (4) eine Schweißnaht vom Typ Ultraschall-Schweißnaht ist.

11. Elektrochrome Vorrichtung mit kontrollierter Durchlässigkeit nach Anspruch 10, **dadurch gekennzeichnet, dass** der erste Stromzuführverbinder (15) über den gesamten Umfang der oberen Elektrode (9) angeordnet ist.

12. Elektrochrome Vorrichtung mit kontrollierter Durchlässigkeit nach einem der vorstehenden Ansprüche, **dadurch gekennzeichnet, dass** wenigstens eine der Elektroden (4, 9) von wenigstens einer Mischoxidschicht aus Zinn und Indium ITO gebildet ist.

13. Elektrochrome Vorrichtung mit kontrollierter Durchlässigkeit nach einem der vorstehenden Ansprüche, **dadurch gekennzeichnet, dass** die freien Bereiche (4a, 9a, 9'a), die durch die Randentschichtungen vom Typ vollständig (5) und selektiv (12) definiert sind, an ihrem Umfang gelegen sind.

14. Elektrochrome Vorrichtung mit kontrollierter Durchlässigkeit nach Anspruch 13, **dadurch gekennzeichnet, dass** das Substrat (3) eine Rechteckform aufweist und dass die Randentschichtungen vom Typ selektiv (5) und vollständig (12) jeweils parallel zu gegenüberliegenden Seiten (3a, 3b) des Substrats (3) ausgebildet sind.

15. Elektrochrome Vorrichtung mit kontrollierter Durchlässigkeit nach einem der vorstehenden Ansprüche, **dadurch gekennzeichnet, dass** die Randentschichtungen vom Typ vollständig (5) und selektiv (12) jeweils senkrecht sind.

16. Elektrochrome Verglasung, **dadurch gekennzeichnet, dass** sie eine elektrochrome Vorrichtung nach einem der Ansprüche 1 bis 15 umfasst, mit insbesondere einer veränderlichen Licht- und/oder Energiedurchlässigkeit und/oder -reflexion, mit dem Substrat oder wenigstens einem Teil der Substrate, transparent oder teilweise transparent, aus Kunststoff, die vorzugsweise als Mehrfach-und/oder Verbundverglasung oder als Doppelverglasung angebracht ist.

## Claims

1. Electrochromic device having controlled transmission or reflection of at least one electrically controllable active area (CDEF), having, on a carrier substrate (3), a multilayer stack comprising at least, in succession, a layer forming a lower electrically conductive electrode (4), various functional layers (7) at least one of which is an electrochromic layer, and a layer forming an upper electrically conductive electrode (9), the device also comprising a first current-supply connector (15), a second current-supply connector (21) and connection means (20, 21a), and in which:
- at least one partition (12), denoted "selective", passes through the upper electrode (9) and the various layers separating the upper electrode from the lower electrode (4) without passing through the lower electrode, this selective partition (12) dividing at least the surface of the upper electrode (9) into two regions electrically isolated from each other, namely a free region (9a) and an active region (9b) containing the active area (CDEF); and
- at least one free region (9a) of the upper electrode (9) receives the first current-supply connector (15) soldered to the active region (4b) of the lower electrode (4); and **characterized in that**
- at least one partition (5), denoted "total", passes through the upper electrode (9) and the various layers separating the upper electrode from the substrate (3), this total partition (5) dividing at least the surface of the lower electrode (4) into two regions electrically isolated from each other, namely a free region (4a) and an active region (4b) containing the active area (CDEF); and
- the active region (CDEF) of the upper electrode (9) is in electrical contact with the connection means (20, 21a) connected to the second current-supply connector (21), which is electrically isolated from the free region (9a) connected to the lower electrode (4) ; and **in that** the total partition (12) divides the surface of the upper electrode (9) into two regions, namely a second free region (9'a) and an active region containing the active area (CDEF), the second current-supply connector (21) being placed into the second free region (9'a) of the upper electrode (9).

2. Controlled-transmission electrochromic device according to Claim 1, **characterized in that** the connection means consist of an array of fine electrically conducting parallel wires (20).

3. Controlled-transmission electrochromic device according to Claim 2, **characterized in that** it comprises transparent insulating bands that are placed between the free regions (9a, 9'a) of the upper electrode (9) and the second current-supply connectors (21) between which connectors the wires (20) are placed.

4. Controlled-transmission electrochromic device according to Claim 1, **characterized in that** the connection means consist of a metal frame (21a) especially a foil, placed on the periphery of the active region (9b).

5. Controlled-transmission electrochromic device according to one of the preceding claims, **characterized in that** it comprises a transparent support (22), in particular formed from a thermoplastic polymer, such as, for example, polyurethane or polyvinyl butyral, PVB, the connection means (20, 21a) being supported by the transparent support.

6. Controlled-transmission electrochromic device according to Claim 5, **characterized in that** the support (22) consists of a lamination interlayer.

7. Electrochromic device according to Claim 1, **characterized in that** the first current-supply connector (15) soldered to the lower electrode (4) is placed onto several free regions (9a, 9'a) of the upper electrode (9), and electrical isolation means are provided between said second current-supply connector (21) and the surface of the upper electrode (9).

8. Electrochromic device according to Claim 7, **characterized in that** the isolation means consist of a thin electrically insulating sheet (26).

9. Controlled-transmission electrochromic device according to one of the preceding claims, **characterized in that** the carrier substrate (3) has a glazing function and, in particular, is made of glass or plastic.

10. Controlled-transmission electrochromic device according to one of the preceding claims, **characterized in that** the solder joint between the first current-supply connector (15) and the lower electrode (4) is ultrasonically soldered.

11. Controlled-transmission electrochromic device according to Claim 10, **characterized in that** the first current-supply connector (15) is placed onto the entire periphery of the upper electrode (9).

12. Controlled-transmission electrochromic device according to one of the preceding claims, **characterized in that** at least one of the electrodes (4, 9) is formed from at least one indium tin oxide layer, ITO.

13. Controlled-transmission electrochromic device according to one of the preceding claims, **characterized in that** the free regions (4a, 9a, 9'a), defined by the total partitions (5) and the selective partitions (12), are located on the periphery of said device.

14. Controlled-transmission electrochromic device according to Claim 13, **characterized in that** the substrate (3) is rectangular shaped and **in that** the selective partitions (5) and the total partitions (12) are respectively produced so as to be parallel with opposed sides (3a, 3b) of the substrate (3).

15. Controlled-transmission electrochromic device according to one of the preceding claims, **characterized in that** the total partitions (5) and the selective partitions (12) are respectively perpendicular.

16. Electrochromic glazing, **characterized in that** it includes an electrochromic device according to one of Claims 1 to 15, in particular having a variable light and/or energy transmission and/or reflection, with the substrate or at least part of the substrates transparent or partially transparent, made of plastic, preferably mounted as multiple and/or laminated glazing or as double glazing.
